# EUROPEAN PATENT APPLICATION

(11) **EP 1 235 219 A2**
(43) Date of publication of application: **28.08.2002**
(21) Application number: 01310626.5
(22) Date of filing: 19.12.2001
(51) Int. Cl.: G11B 20/00, G11B 20/10, H04N 7/16, G06F 1/00

(54) **Recording medium that can prevent fraudulent usage of content and content rental system using such recording medium**

(30) Priority: 27.12.2000 JP 2000396580
(71) Applicant: SHARP KABUSHIKI KAISHA, Osaka 545-8522 (JP)
(72) Inventor: Matsubara, Goh, Nara-shi, Nara (JP); Matsubara, Takanobu, Nara-shi, Nara (JP)
(74) Representative: Brown, Kenneth Richard

(57) **Abstract**

When reproduction is requested from an external connection apparatus in a state where a recording medium (10) is loaded in a reader (30), a read operation is initiated. A content request is issued to the recording medium (10). On the part of the recording medium (10), after the request is received, a voltage measurement unit (109) measures the voltage of an accumulation unit (110). It is assumed that the allowed period of reproduction has expired when the measured value is below a predetermined value. An expiration notification is issued to the content reader (30). Then, the process ends. Thus, the content recorded in the recording medium can be reliably prevented from being used improperly after the usage expiration term.

## Description

### BACKGROUND OF THE INVENTION

### Field of the Invention

The present invention relates to a recording medium and a content rental system using such a recording medium. Particularly, the present invention relates to a recording medium and content rental system that can prevent fraudulent usage of content.

### Description of the Related Art

Some recording media such as the general SD (Secure Digital) cards and FDs (Flexible Disks) have time restrictions imposed so that read out of the content therein is disabled at an elapse of a predetermined period of time. As to these restrictions, a built-in clock in the content reader is used to to monitor the usage time limit recorded in the recording medium, and inhibit read out when the expiration term becomes due.

In the case where a built-in clock in a content reader is employed as in the conventional apparatus, the time of the internal clock can be readily altered by the user. There was a problem that a user may intentionally alter the internal clock to a past date to allow fraudulent usage even after the usage expiration term.

### SUMMARY OF THE INVENTION

An object of the present invention is to provide a recording medium that can reliably prevent fraudulent usage of the stored content after the usage expiration term.

Another object of the present invention is to provide a content rental system that inhibits fraudulent usage.

According to an aspect of the present invention, a recording medium recording content includes an accumulation unit accumulating power, a discharge unit causing the accumulation unit to discharge, a measurement unit measuring a voltage of the accumulation unit, and a control unit controlling content reproduction based on a value of voltage measured by the measurement unit.

Since the voltage of the discharging accumulation unit is measured and reproduction of content is under control based on the measured voltage value of the accumulation unit, the content recorded in the recording medium cannot be used unlimitedly.

Preferably, the accumulation unit is chargeable by being connected to a power supply apparatus that supplies power to the accumulation unit. The control unit includes an authentication unit conducting authentication of the power supply apparatus, and a charge permit unit permitting charging of the accumulation unit when verification succeeds at the authentication unit.

By conducting authentication of an apparatus that supplies power to a chargeable accumulation unit and permitting charging of the accumulation unit when the authentication is successful, content reproduction restriction can be canceled and extended for a particular apparatus alone.

Further preferably, a first voltage value to charge the accumulation unit and a predetermined second voltage value that disables content reproduction are set. Reproduction of the content is controlled using these first and second voltage values.

By appropriately setting the first and second voltage values, control over reproduction of content can be provided in a desirable manner.

Further preferably, a predetermined charge key is stored in the recording medium. The authentication unit conducts authentication using the charge key. Authentication of the charging apparatus can be conducted readily since authentication of the apparatus that supplies power to the accumulation unit is conducted using a charge key stored in the medium.

The charge key may be erased when authenticity is verified. Accordingly, a recording medium that can permit charging only once can be provided.

Since charging can be permitted only once, a recording medium rendered to attempt effective distribution of content can be modified to a recording medium that cannot distribute content by software processing.

According to another aspect of the present invention, a content rental system includes a content recorder recording content into a recording medium as the apparatus of supplying power to the accumulation unit of a recording medium described above. The content recorder includes a control unit controlling charging to the accumulation unit of a recording medium, and a set unit setting a usage expiration term of the content recorded in the recording medium.

By supplying power using a content recorder that records content into a recording medium, and controlling charging to the accumulation unit of the recording medium when content is to be recorded into the recording medium to set the content usage expiration term, the content can be provided on a rental basis for an arbitrary usage expiration term.

According to a further aspect of the present invention, the content rental system of the above aspect employing a recording medium includes a power supply unit supplying power to the accumulation unit of a recording medium, and a content recorder recording content into a recording medium. The content recorder includes a modify unit modifying the amount of discharge in the discharge unit of the recording medium, and a set unit setting the content usage expiration term recorded in the recording medium.

By modifying the amount of discharge of the discharge unit in the recording medium to set the usage expiration term of content when content is to be recorded into that recording medium, the content can be provided on a rental basis for an arbitrary usage expiration term.

According to still another aspect of the present invention, the content rental system of the above aspect employing a recording medium includes a power supply unit supplying power to the accumulation unit of a recording medium, and a content recorder recording content into a recording medium. The content recorder controls the control unit of the recording medium so as to modify the voltage value of the accumulation unit that provides control of content reproduction. Accordingly, the usage expiration term of the content recorded into a recording medium can be set.

By controlling the control unit of a recording medium when content is to be recorded into that recording medium so as to modify the voltage value of the accumulation unit that controls the content reproduction, the content usage expiration term can be set. Therefore, when the content recorded in a recording medium is to be rented, an arbitrary term can be set.

As a result, the content recorded in a recording medium is no longer available without limitation. Thus, fraudulent usage of the content recorded in the recording medium can be prevented reliably at the elapse of the usage expiration term.

The content that is available for an arbitrary term can be provided on a rental basis. The problem of the rented content being used improperly even after the elapse of the usage expiration term of the content can be eliminated.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Figs. 1 and 2 are functional block diagrams showing a structure of a system employing a recording medium according to an embodiment of the present invention.
Fig. 3 is a flow chart of the process of a recording medium of the present invention.
Fig. 4 is a flow chart of a charge process operation.
Figs. 5A-5C are diagrams to describe discharge voltage examples of a capacitor.
Fig. 6 is a diagram to describe the relationship among the usage time length, charge voltage, and end voltage.
Fig. 7 is a flow chart of a recording process.
Fig. 8 is a flow chart of a readout process.
Figs. 9A and 9B are diagrams to describe a scenario A.
Fig. 10 is a diagram to describe scenarios A, B and C.
Figs. 11 and 12 are diagrams to describe scenario B.
Fig. 13 is a diagram to describe scenario C.

### DESCRIPTION OF THE PREFERRED EMBODIMENTS

Embodiments of the present invention will be described in detail hereinafter with reference to the drawings.

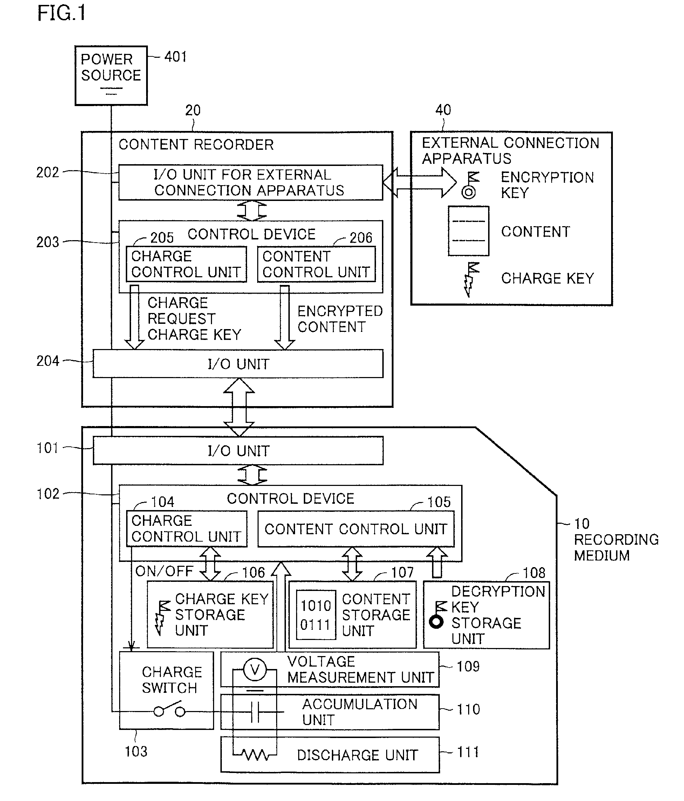

Referring to Fig. 1, when content is to be recorded into a recording medium in a content record/read system employing a recording medium according to an embodiment of the present invention, a recording medium 10 is connected to an external connection apparatus 40 via a content recorder 20.

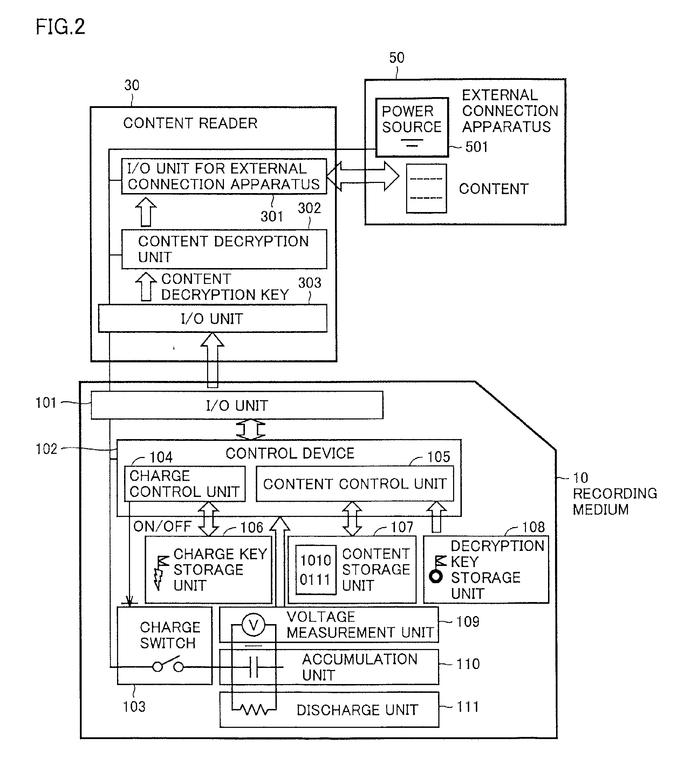

Referring to Fig. 2, when content is to be read out from the recording medium in the above system, recording medium 10 is connected to an external connection apparatus 50 via a content reader 30.

In Figs. 1 and 2, content recorder 20 and content reader 30 are employed as apparatuses incorporated into a server computer as a medium drive, for example, an apparatus connected via a USB (Universal Serial Bus).

Referring to Figs. 1 and 2, an I/O unit 101 of recording medium 10 is the interface that establishes communication between content recorder 20 and content reader 30. I/O unit 101 is formed of a connector and an input/output buffer IC. A control device 102 is formed of a microcomputer to control each element in recording medium 10 in response to a request from content recorder 20 and content reader 30. A charge control unit 104 provides control of the authentication of a charge key that will be described afterwards and the ON/OFF of a charge switch 103. This function can be achieved by means of a predetermined program. A content control unit 105 controls the management of content reading and the usage expiration time. This function can be achieved by means of a predetermined program. A voltage measurement unit 109 measures the voltage of an accumulation unit 110 which is a capacitor. Accumulation unit 110 continues discharging in accordance with an elapse of time by the circuit of a discharge unit 111. A content storage unit 107 is formed of a non-volatile memory to store the content. A charge key storage unit 106 and a decryption key storage unit 108 are similarly formed of non-volatile memories to store keys unique to recording medium 10.

Content recorder 20 records content into recording medium 10 and also conducts charging. An I/O unit 202 for an external connection apparatus (for example, a server computer recorded with content) is an interface that establishes communication with an external connection apparatus. I/O unit 202 is formed of a connector and an input/output buffer IC. An I/O unit 204 is an interface that establishes communication with recording medium 10 and that supplies power towards recording medium 10. I/O unit 204 is formed of a connector and an input/output buffer IC. A power source 401 is the power source of content recorder 20. A control device 203 is constituted by a microcomputer to control the charge request and content recording. A charge control unit 205 controls the input/output of a charge key. This function may be achieved by a predetermined program. A content control unit 206 controls the input/output of content and the encryption key of content, as well as the encryption of content. This function may be achieved by a program.

Content reader 30 reads out the content recorded in recording medium 10. An I/O unit 301 for an external connection apparatus is an interface that establishes communication with an external connection apparatus. I/O unit 301 is formed of a connector and an input/output buffer IC. An I/O unit 303 is an interface that establishes communication with recording medium 10 and that supplies power towards recording medium 10. I/O unit 303 is formed of a connector and an input/output buffer IC. A content decryption unit 302 is constituted by a microcomputer to decrypt the content.

In the case where content recorder 20 is constituted by a peripheral apparatus (for example, an apparatus connected to an external source using a USB (Universal Serial Bus) with respect to a personal computer) of an external connection apparatus (for example, a personal computer), power can be supplied from power source 401 of an external connection apparatus 40 that is the connection source via an I/O unit 202 for an external connection apparatus.

In the case where content reader 30 is constituted by a portable terminal, a power source 501 may be a battery or the like incorporated in the apparatus.

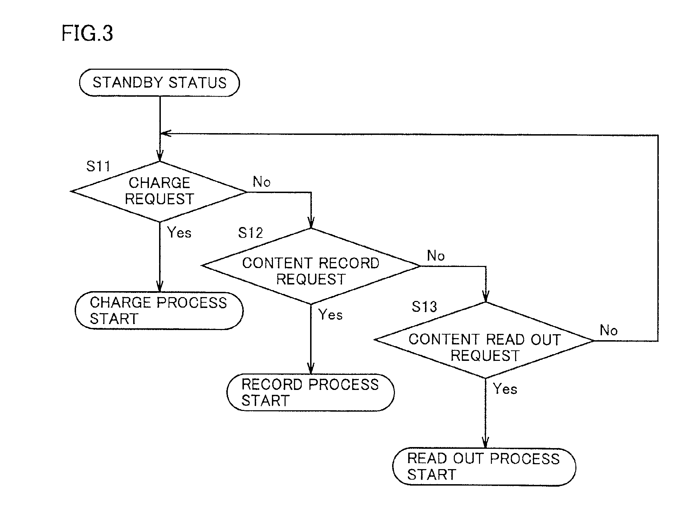

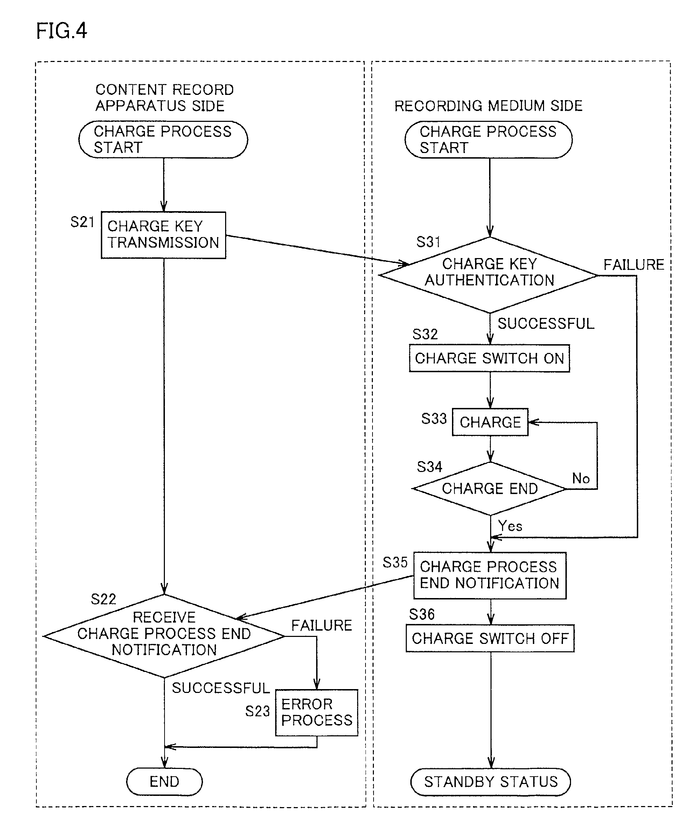

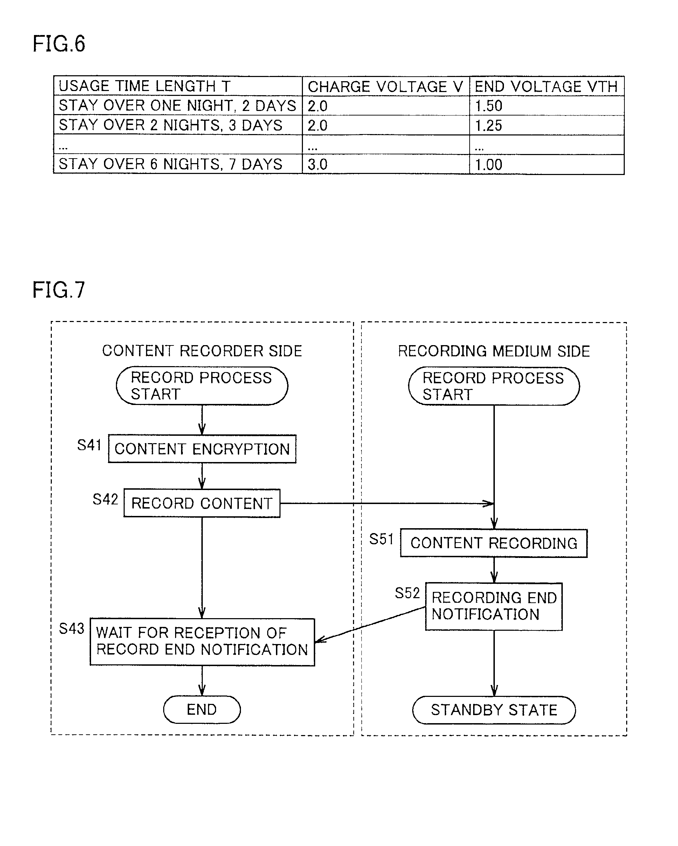

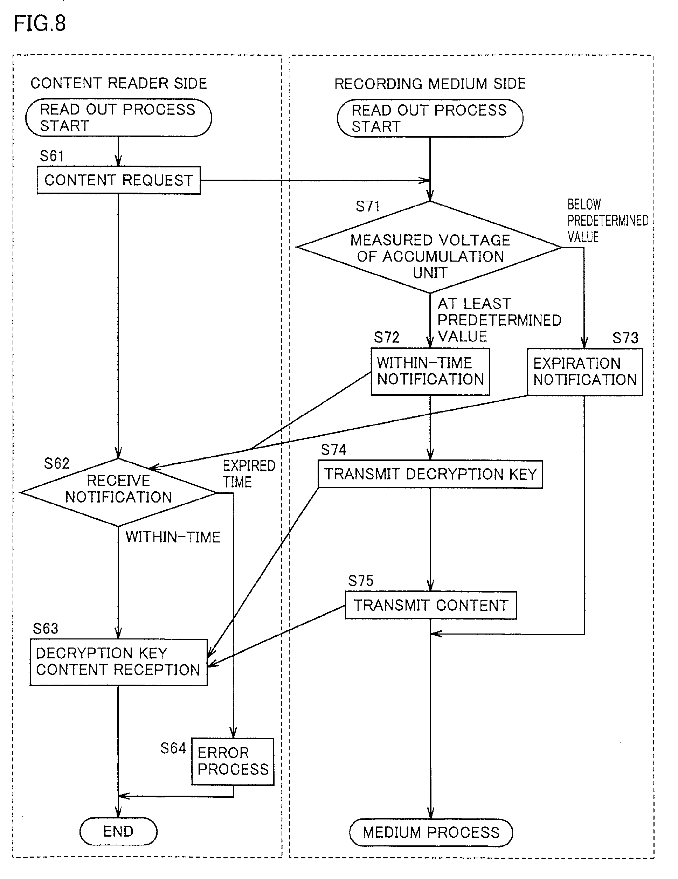

The process carried out in the present embodiment will be described hereinafter. The flow of the process carried out by control device 102 in recording medium 10 is shown in Fig. 3. Referring to Fig. 3, recording medium 10 is in a standby status. Various processing are carried out in response to a request from content recorder 20 or content reader 30. When there is a charge request (step S11) from content recorder 20, control proceeds to the start of a charge process (Fig. 4). When there is a content record request (step S12), control proceeds to the start of a record process (Fig. 7). When there is a content read request (step S13), control proceeds to the start of a read process (Fig. 8).

Fig. 4 shows a charge process flow chart. Referring to Fig. 4, when a charge request is generated from external connection apparatus 40, control device 203 of content recorder 20 issues a request for a charge key to external connection apparatus 40 to permit charging with respect to a recording medium. Upon input of a charge key, charge control unit 205 passes the charge key to recording medium 10 (step S21). Charge control unit 104 in recording medium 10 reads out the charge key unique to the recording medium from a charge key storage unit 106 to verify with the charge key sent from content recorder 20 (step S31). When the authentication is successful as a result of verifying that they are the same charge keys, charge switch 103 is turned on (step S32). A charge operation commences (step S33). When the voltage measured by voltage measurement unit 109 exceeds a predetermined value (step S34), a charge process end notification is issued (step S35). Charge switch 103 is turned off (step S36), and the process is completed. On the part of content recorder 20, the charge process end notification is received (step S22). In the case where charging fails, an error process notifying the user who has issued the charge request that the authentication of the charge key has failed is carried out (step S23). Then, the process ends.

In the case where specification is made that recording medium 10 is to be used as a recording medium that can be used only once, charge control unit 104, at the end of one charging operation, erases the charge key stored in charge key storage unit 10. This means that any charge request thereafter will be rejected to cause failure of the authentication by charge control unit 104 since there is no charge key.

The method of setting the usage expiration term length of the content in recording medium 10 will be described hereinafter.

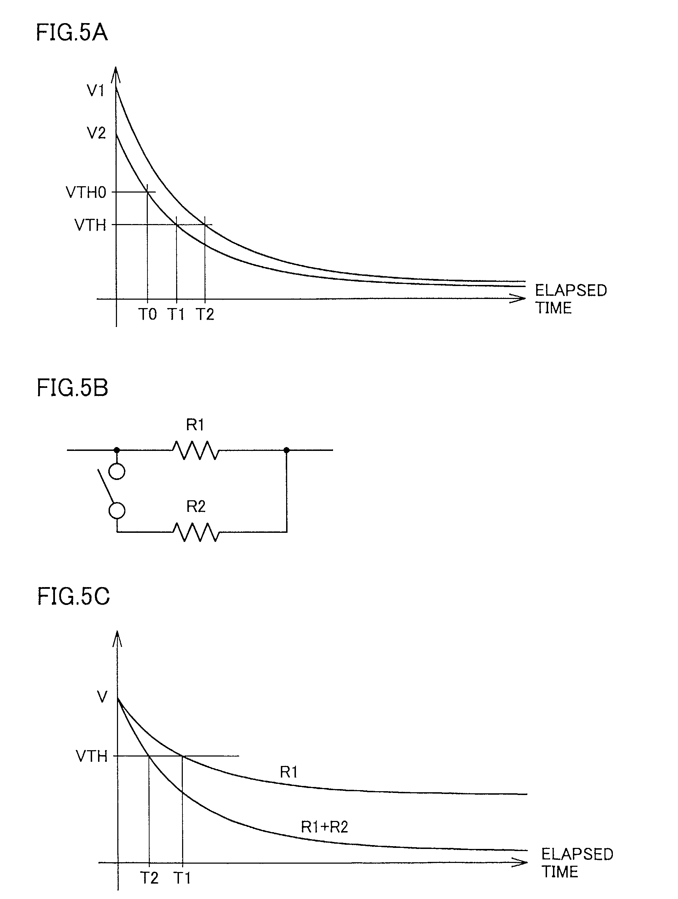

The accumulation unit is formed of a capacitor and the discharge unit is formed of a resistor. Therefore, the change in the capacitor voltage over the discharging time is as shown in Fig. 5A.

The allowed period of usage is controlled by the combination of a charge completed voltage (V1, V2) when charging is effected and the end voltage (VTH0, VTH) regarded as the discharged level. Specifically, referring to Fig. 5A, the allowed period of usage becomes T2 by setting the charge completed voltage to V1 and the end detected voltage to VTH. If the charge completed voltage is set to V2, the allowed period of usage can be set to T1. If the end detected voltage is set to VTH0, the allowed period of usage can be set to T0.

The charge process will be described with reference to Fig. 4. At step S21, content recorder 20 transmits a charge key to recording medium 10 and notifies recording medium 10 of the period of usage. In response to reception of this notification at recording medium 10, an appropriate charge voltage V and end voltage VTH are read out from a table as shown in Fig. 6 based on the notified period of usage. The table storing respective charge voltage V and end voltage VTH is stored in charge control unit 104. Charge control unit 104 in recording medium 10 sets voltage measurement unit 109 to detect charge completed voltage V1. Then, control proceeds to step S31 to turn on charge switch 103. In response, a charging operation is initiated (step S33). The charging operation ends when voltage measurement unit 109 detects charge completed voltage V (step S34). Then, charge switch 103 is turned off, whereby the charge process ends. By setting voltage measurement unit 109 to detect end voltage VTH, the time length up to T can be set as the allowed period of usage.

The discharging period of time can be altered by the modification of discharge unit 111. Fig. 5B shows a structure of discharge unit 111. A switch is provided with discharge resistors R1 and R2 connected in parallel. By increasing the discharging amount, the discharging period of time until a predetermined voltage is attained can be altered as shown in Fig. 5C. The discharging time can be forwarded two times faster when R1 = R2. In a set (charge) state where the discharged level is to be attained in 48 hours with R1 alone, the commencement of discharging with the additional connection of R2 in parallel allows the discharging to be set to 24 hours.

Although the above description of the setting method is based on a capacitor as accumulation unit 110, the present invention is not limited thereto. A secondary battery can be used as accumulation unit 110. In such a case, it is desirable to appropriately set the charge voltage and end voltage according to the discharge characteristic thereof. In the case where a secondary battery is employed as accumulation unit 110, the power accumulated in accumulation unit 110 may also be used as the power source to drive control device 102 in recording medium 10 in reading out the content.

Fig. 7 is a flow chart of a content record process. When a content record request is issued from external connection apparatus 40, content recorder 20 requests for a content encryption key. This encryption key forms a pair with a decryption key unique to and prestored in recording medium 10. The encryption key is appended at the same time of purchasing recording medium 10. Upon receiving the content and the encryption key, content control unit 206 encrypts the content (step S41), which is transferred to recording medium 10 (step S42). On the part of recording medium 10, the content is recorded therein (step S51). Following this recording, a record end notification is issued to content recorder 20 (step S52). Then, recording medium 10 returns to a standby state. Content recorder 20 receives a record end notification (step S43), and the process ends.

The content read out process will be described with reference to Fig. 8. In the case where a reproduction request is issued from external connection apparatus 50 under the state where recording medium 10 is loaded in reader 30, a read process start status is entered. A content request is issued to recording medium 10 (step S61). On the part of recording medium 10, in response to receiving the request, voltage measurement unit 109 measures the voltage of accumulation unit 100 (step S71). Determination is made that the term has expired when the measured voltage is below a predetermined value. An expiration notification is issued to content reader 30 (step S73), and the process ends. When content reader 30 receives an expiration notification (step S62), an error process notifying the user of the expiration is carried out (step S64). Then, the process ends. In the case where the term has not expired, recording medium 10 issues a within-time notification to content reader 30 (S72). Then, the decryption key stored in decryption key storage unit 108 in a read-only state at the time of purchase as well as the encrypted content are transmitted (step S74, S75). Then, the process ends. Following the reception of the decryption key and content (step S63), content reader 30 outputs the decrypted content to external connection apparatus 50, and the process ends.

According to the present embodiment, the person who can charge accumulation unit 110 can be restricted to the one who has produced the content or the one who is authorized to distribute the content. Any recording medium 10 with a distributed content that has an expired usage term can be disabled of readout. Thus, the following scenarios A-C can be realized.

### SCENARIO A

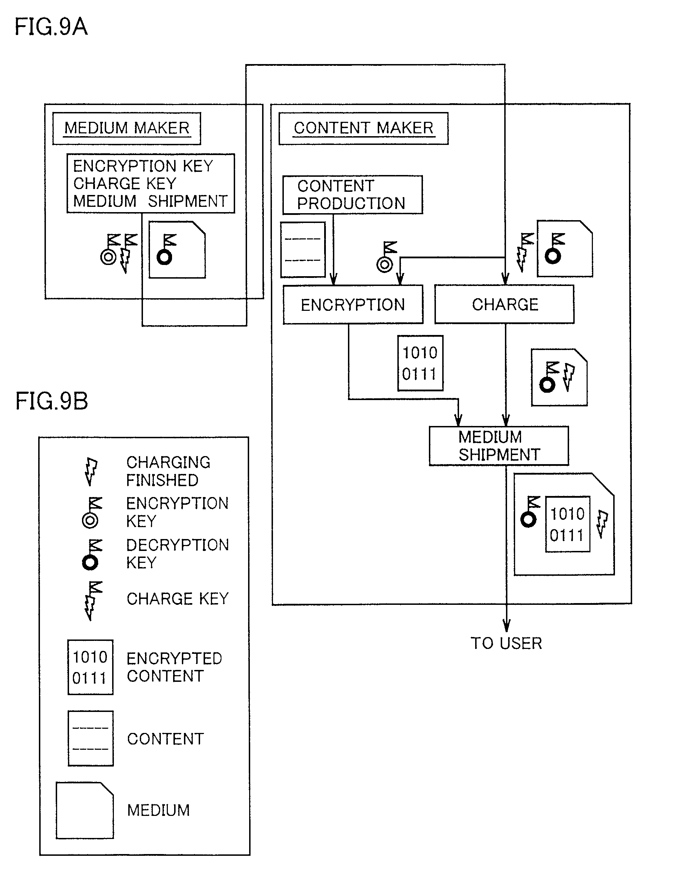

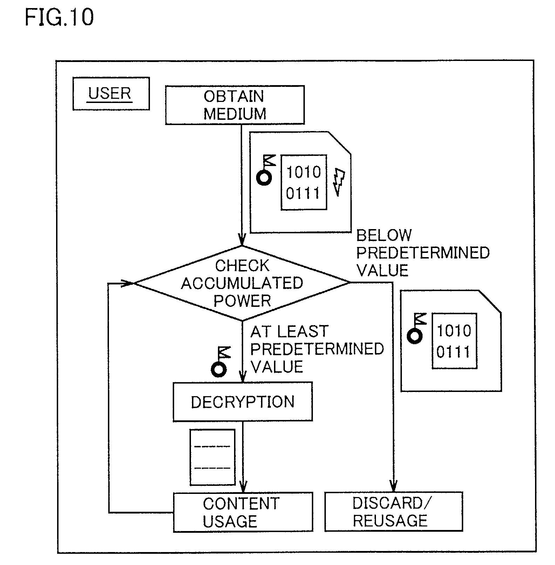

Scenario A will be described with reference to Figs. 9A, 9B and 10.

Scenario A corresponds to the usage of a recording medium having trial content to be distributed with a time limit. A read-only recording medium that can be used only once is employed. Charging is allowed only once. The user can enjoy the content for a predetermined period of time. At the elapse of the predetermined time, the user will no longer be able to enjoy the content.

The recording medium maker provides a charge key and an encryption key together with the recording medium to the content maker. The content maker encrypts and records the encrypted content into the recording medium. Also, charging is effected using the charge key. Since the power is required for only a single-use, the charge key is not passed to the user. Only the recording medium is provided.

When the user is to enjoy the content, content reader 30 obtains the decryption key from recording medium 10 to decrypt the content when within the time limit. Thus, the content is available. However, if the term has expired and accumulation unit 110 has completely discharged the power, content reader 30 will not be able to obtain the decryption key from recording medium 10. The content cannot be decrypted and is no longer available. Recharging is impossible since the user does not possess the charge key unique to that recording medium 10. The content can no longer be used again.

### SCENARIO B

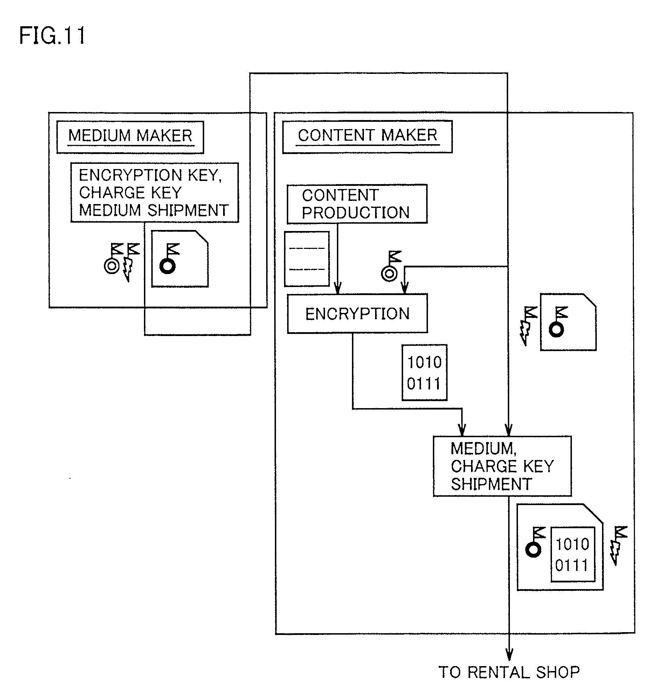

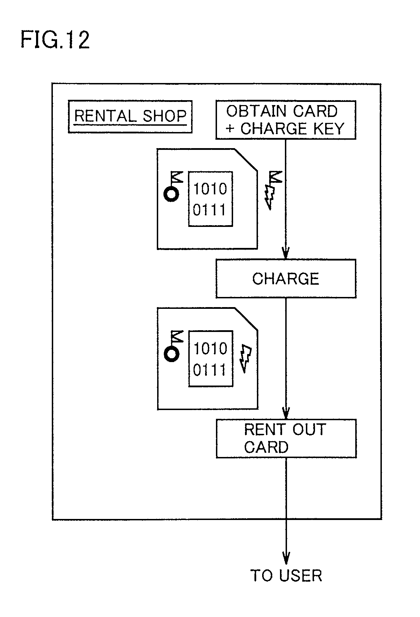

Scenario B will be described according to Figs. 10-12.

Scenario B corresponds to the usage at a conventional rental shop. Recording medium 10 is set to be read-only, and is rechargeable. The recording medium maker provides a charge key and an encryption key together with recording medium 10 to the content maker. The content maker encrypts the content using the encryption key and records the encrypted content into recording medium 10. Then, recording medium 10 is provided together with the charge key to the rental shop. The rental shop charges recording medium 10 using the charge key and lends out only recording medium 10 the user. The charge key is under strict safe keeping. The user can enjoy the content during the period of time accumulation unit 110 maintains power. When accumulation unit 110 completely discharges power so that the decryption key cannot be obtained from recording medium 10, the content can no longer be enjoyed. That recording medium 10 is returned to the rental shop. The rental shop can rent out that recording medium 10 an unlimited number of times, when returned, by charging again that recording medium 10 using the charge key unique to that recording medium 10.

### SCENARIO C

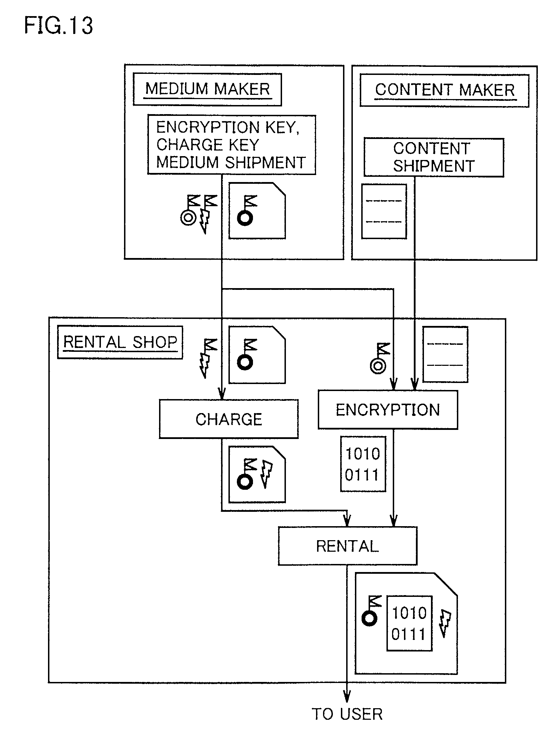

Scenario C will be described with reference to Figs. 10 and 13.

Scenario C corresponds to the usage at a content-rental shop. The content-rental shop is based on the concept that the item to be rent out is the content, and a recording medium is simply a medium to carry the content. Recording medium 10 is rechargeable and rerecordable.

The content-rental shop can use recording medium 10 for a plurality of times to record again content. After the user enjoys the content for a predetermined period of time, the content is no longer available. In contrast to the conventional case where the rental shop uses a recording medium that is readable as long as the recording medium is in the hands of the user, improper usage is reliably inhibited since the usage expiration term is definite. A rental system (business) is possible with the merit of the user not having to return the recording medium to the rental shop before the due date.

The recording medium maker provides a charge key and an encryption key together with recording medium 10 to the rental shop. The content maker provides the content to the rental shop. The rental shop encrypts the content using the encryption key to record the encrypted content into recording medium 10. The rental shop also charges recording medium 10.

The user who has rented recording medium 10 can enjoy the content for a predetermined period of time until accumulation unit 110 completely discharges the power and the decryption key can no longer be obtained from recording medium 10. When the user returns that recording medium 10 at the time of renting another content, the rental shop can charge recording medium 10 and record the content required by the user into that recording medium. Thus, reusage of recording medium 10 is allowed.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A recording medium (10) in which content is recorded, comprising:
an accumulation unit (110) accumulating power,
a discharge unit (111) causing said accumulation unit (110) to discharge,
a measurement unit (109) measuring voltage of said accumulation unit (110), and
a control unit (102) controlling reproduction of said content based on a value of voltage measured by said measurement unit (109).

2. The recording medium according to claim 1, wherein
said accumulation unit (110) is chargeable by being connected to a power supply apparatus (101) that supplies power to said accumulation unit (110),
said control unit (102) comprises an authentication unit (104) conducting authentication of said power supply apparatus (401), and a charge permit unit (104) permitting charging of said accumulation unit (110) when authentication at said authentication unit is successful.

3. The recording medium according to claim 2, wherein a predetermined charge key is stored in said recording medium (10),
said authentication unit (104) conducting said authentication using said charge key.

4. The recording medium according to claim 3, wherein said authentication unit (104) erases said charge key when said authentication is successful.

5. A content rental system using a recording medium defined in claim 2, said power supply apparatus (104) including a content recorder (20) recording content into said recording medium (10),
wherein said content recorder (20) comprises
a control unit (104) controlling charging of the accumulation unit (110) of said recording medium (10), and an usage expiration term set unit (104) setting a usage expiration term of content recorded in said recording medium (10).

6. A content rental system using a recording medium defined in claim 2, comprising a power supply unit (401) supplying power to an accumulation unit (110) of said recording medium (10), and a content recorder (20) recording content into said recording medium (10),
wherein said content recorder (20) comprises
a modify unit (110) modifying an amount of discharge at a discharge unit (111) of said recording medium (10), and
a set unit (104) setting a usage expiration term of the content recorded into said recording medium (10).

7. A content rental system using a recording medium defined in claim 2, comprising a power supply unit (401) supplying power to an accumulation unit (110) of said recording medium (10), and a content recorder (20) recording content into said recording medium (10),
wherein said content recorder (20) controls a control unit (102) of said recording medium (10) to alter a voltage value of the accumulation unit controlling reproduction of content, whereby a usage expiration term of the content recorded in said recording medium is set.

8. The recording medium according to claim 2, wherein said control unit (102) includes a predetermined voltage set unit (104) setting a first voltage value charged at said accumulation unit (110), and a predetermined second voltage value that disables reproduction of said content,
wherein reproduction of said content is controlled based on said first and second voltage values.

9. The recording medium according to claim 8, wherein said predetermined voltage set unit (104) alters said first voltage value.

10. The recording medium according to claim 8, wherein said predetermined voltage set unit (104) alters said second voltage value.

11. The recording medium according to claim 8, comprising a discharge amount control unit (110) controlling an amount of discharge of said discharge unit (111).

12. The recording medium according to claim 8, wherein said accumulation unit (110) is a secondary battery.

13. A recording medium for recording content thereon, and which incorporates an accumulation unit for holding a measurable time-dependent electrical parameter, and a control unit for controlling reproduction of said content in accordance with a measured value of said parameter.

14. A recording medium according to claim 13, wherein said accumulation unit is adapted to store electrical energy which reduces with time, and said parameter varies as the amount of stored electrical energy varies.

15. A recording medium according to claim 14, wherein said accumulation unit provides as said parameter an output voltage which varies as the accumulation unit discharges.

16. A recording medium adapted for time-limited reproduction of its content by incorporation of an electrical power storage unit which gradually discharges.
